# EUROPEAN PATENT SPECIFICATION

(11) **EP 2 186 154 B1**
(45) Date of publication and mention of the grant of the patent: **26.10.2011**
(21) Application number: 08829283.4
(22) Date of filing: 22.08.2008
(51) Int. Cl.: H01M 8/04, H01M 8/24, H01M 8/06, H01M 8/12

(54) **FUEL CELL SYSTEM AND METHOD OF OPERATING THE FUEL CELL SYSTEM**
BRENNSTOFFZELLENSYSTEM UND VERFAHREN ZUM BETREIBEN DES BRENNSTOFFZELLENSYSTEMS
SYSTÈME DE PILES À COMBUSTIBLE ET SON PROCÉDÉ DE FONCTIONNEMENT

(30) Priority: 03.09.2007 JP 2007228213
(43) Date of publication of application: 19.05.2010
(73) Proprietor: Honda Motor Co., Ltd., Minato-ku Tokyo 107-8556 (JP)
(72) Inventor: DAN, Koji, Wako-shi Saitama 351-0193 (JP)
(74) Representative: Prechtel, Jörg
(86) International application number: PCT/JP2008/065476
(87) International publication number: WO 2009/031458

(56) References cited:
- WO-A-2006/073150
- WO-A-2006/090685
- JP-A- 2006 294 508
- JP-A- 2007 128 717

## Description

### Technical Field

The present invention relates to a fuel cell system including a fuel cell stack, an evaporator, a reformer, and a control device. The fuel cell stack is formed by stacking a plurality of fuel cells. Each of the fuel cells is formed by stacking an electrolyte electrode assembly and a separator. The electrolyte electrode assembly includes an anode, a cathode, and an electrolyte interposed between the anode and the cathode. The evaporator produces a mixed fuel of a raw fuel chiefly containing hydrocarbon and water vapor obtained by evaporating water. The reformer produces a fuel gas by reforming the mixed fuel. Further, the present invention relates to a method of operating the fuel cell system.

### Background Art

Typically, a solid oxide fuel cell (SOFC) employs an electrolyte of ion-conductive solid oxide such as stabilized zirconia. The electrolyte is interposed between an anode and a cathode to form an electrolyte electrode assembly (MEA). The electrolyte electrode assembly is interposed between separators (bipolar plates). In use, normally, predetermined numbers of the electrolyte electrode assemblies and the separators are stacked together to form a fuel cell stack.

As the fuel gas supplied to the fuel cell, normally, a hydrogen gas generated from hydrocarbon raw material by a reformer is used. In general, in the reformer, a reformed raw material gas is obtained from hydrocarbon raw material of a fossil fuel or the like, such as methane or LNG, and the reformed raw material gas undergoes steam reforming, partial oxidation reforming, or autothermal reforming to produce a reformed gas (fuel gas).

In the system, at the time of starting, and at the time of stopping operation of the fuel cell, in order to prevent oxidation of the anode by oxygen remaining in the fuel cell, remaining oxygen is purged using an inert gas. Therefore, conventionally, a purge gas supply system such as a dedicated gas tank is provided. Therefore, the overall size of the fuel cell system becomes large, and the fuel cell system is complicated.

Therefore, for example, in a method of operating a fuel cell disclosed in Japanese Laid-Open Patent Publication No. 2007-128717, at the time of starting operation, a reducing gas containing hydrogen is produced in partial oxidation reforming reaction or autothermal reforming reaction by a reformer, and the reducing gas is supplied to a fuel electrode of a power generation cell to maintain the atmosphere around the fuel electrode in the reducing state. In this state, the temperature of the fuel cell is increased.

Further, at the time of stopping operation, the reducing gas containing hydrogen is produced in partial oxidation reforming reaction or autothermal reforming reaction by the reformer, and the reducing gas is supplied to the fuel electrode of the power generation cell to maintain the atmosphere around the fuel electrode in the reducing state. In this state, the temperature of the fuel cell is decreased.

Further, in a method of stopping operation of a fuel cell disclosed in Japanese Laid-Open Patent Publication No. 2006-294508, at the time of stopping power generation, by decreasing the flow rate of water and a hydrogen or carbon hydrogen fuel supplied to the fuel cell, the reducing state at the fuel electrode layer is maintained. In this state, the stack temperature is decreased.

However, in Japanese Laid-Open Patent Publication No. 2007-128717, at the time of starting operation, and at the time of stopping operation, the reformer needs to be maintained in a temperature range where reforming reaction occurs. For this purpose, heat energy is consumed wastefully and uneconomically. Moreover, the system is complicated.

Further, in Japanese Laid-Open Patent Publication No. 2006-294508, the technique is only used at the time of stopping power generation in the fuel cell, and no solution is provided for degradation such as oxidation or the like of the MEA and reforming catalyst at the time of starting operation of the fuel cell.

WO 2006/073150 A shows a fuel cell system comprising: a fuel cell stack; an evaporator for producing a mixed fuel of a fuel chiefly containing hydrocarbon and water vapor obtained by evaporating water; a reformer for producing a fuel gas by reforming the mixed fuel; and a control device, the control device comprising: a fuel supply unit for temporarily supplying fuel to an electrode surface of the anode at the time of starting operation of the fuel cell system (fuel from partial oxidation reaction); a water vapor supply unit for supplying the water vapor to the electrode surface of the anode at least based on the temperature of the steam reformer catalyst; and a fuel gas supply unit for supplying the fuel gas to the electrode surface of the anode by supplying the fuel and the water to the evaporator.

JP 2006/294508 A discloses a molar ratio adjusting unit which adjusts the ratio of water vapor to fuel. The control unit of the system monitors various detection information including stack and steam temperature information.

### Disclosure of Invention

The present invention has been made to solve the problem of this type, and an object of the present invention is to provide a fuel cell system and a method of operating the fuel cell system in which it is possible to inhibit oxidation and carbon precipitation (coking) of the MEA and reforming catalyst, and reduce energy consumption as much as possible, without requiring any additional purge gas supply system.

The present invention relates to a fuel cell system according to claim 1, which comprising a fuel cell stack, an evaporator, a reformer, and a control device. The fuel cell stack is formed by stacking a plurality of fuel cells. Each of the fuel cells is formed by stacking an electrolyte electrode assembly and a separator.. The electrolyte electrode assembly includes an anode, a cathode, and an electrolyte interposed between the anode and the cathode. The evaporator produces a mixed fuel of a raw fuel chiefly containing hydrocarbon and water vapor obtained by evaporating water. The reformer produces a fuel gas by reforming the mixed fuel. Further, the present invention relates to a method of operating the fuel cell system according to claim 7.

According to the present invention, the control device of the fuel cell system comprises a raw fuel supply unit for temporarily supplying the raw fuel to an electrode surface of the anode at the time of starting operation of the fuel cell system, a water vapor supply unit for supplying the water vapor to the electrode surface of the anode at least based on any of the temperature of the fuel cell stack and the temperature of the evaporator after stopping the supply of the raw fuel, and a fuel gas supply unit for supplying the fuel gas to the electrode surface of the anode by supplying the raw fuel and the water to the evaporator at least based on any of detection results of the pressure of the water supplied to the evaporator, the flow rate of the water supplied to the evaporator, the pressure of the water vapor discharged from the evaporator, and the flow rate of the water vapor discharged from the evaporator.

According to a preferred aspect of the present invention, the control device of the fuel cell system comprises a water vapor stop unit for supplying the raw fuel to an electrode surface of the anode by stopping the supply of the water to the evaporator at least based on any of the temperature of the fuel cell stack and the temperature of the evaporator at the time of stopping operation of the fuel cell system, and a raw fuel stop unit for stopping the supply of the raw fuel to the electrode surface of the anode at least based on any of detection results of the pressure of the water supplied to the evaporator, the flow rate of the water supplied to the evaporator, the pressure of the water vapor discharged from the evaporator, and the flow rate of the water vapor discharged from the evaporator.

Further, according to another aspect of the present invention, according to claim 7, at the time of starting operation of the fuel cell system, the method of operating the fuel cell system comprises the steps of temporarily supplying the raw fuel to an electrode surface of the anode, supplying the water vapor to the electrode surface of the anode at least based on any of the temperature of the fuel cell stack and the temperature of the evaporator after stopping the supply of the raw fuel, and supplying the fuel gas to the electrode surface of the anode by supplying the raw fuel and the water to the evaporator at least based on any of detection results of the pressure of the water supplied to the evaporator, the flow rate of the water supplied to the evaporator, the pressure of the water vapor discharged from the evaporator, and the flow rate of the water vapor discharged from the evaporator.

Further, according to a preferred aspect of the present invention, at the time of stopping operation of the fuel cell system, the method of operating the fuel cell system comprises the steps of supplying the raw fuel to an electrode surface of the anode by stopping the supply of the water to the evaporator at least based on any of the temperature of the fuel cell stack and the temperature of the evaporator, and stopping the supply of the raw fuel to the electrode surface of the anode at least based on any of detection results of the pressure of the water supplied to the evaporator, the flow rate of the water supplied to the evaporator, the pressure of the water vapor discharged from the evaporator, and the flow rate of the water vapor discharged from the evaporator.

In the present invention, at the time of starting operation of the fuel cell system, the raw fuel is temporarily supplied to the electrode surface of the anode to discharge the air remaining in the fuel line. Therefore, the atmosphere in the fuel line is a reducing atmosphere in the presence of the raw fuel. At the time of raising the temperature of the fuel cell stack, even if the MEA and the reforming catalyst are in the active state, it is possible to suitably inhibit oxidation of the MEA and the reforming catalyst. Accordingly, improvement in the durability is achieved, and the product life is prolonged advantageously.

Further, at least based on any of the temperature of the fuel cell stack and the temperature of the evaporator, i.e., in the temperature range where the water vapor can be produced stably, and water vapor oxidation of the electrolyte electrode assembly does not occur easily, the water vapor is supplied to the electrode surface of the anode. After it is confirmed that the water vapor is produced stably, the raw fuel and the water are supplied to the evaporator to supply the fuel gas to the electrode surface of the anode. Thus, it is possible to start operation of the fuel cell system stably. Further, degradation of the MEA and the reforming catalyst is prevented, improvement in the reliability and durability is achieved, and the product life is prolonged advantageously.

Thus, it is possible to start operation of the fuel cell system simply by setting the timings of supplying and stopping the raw fuel, the water vapor and the fuel gas without requiring any purge gas supply system additionally. Accordingly, a simple fuel cell system can be provided at low cost easily.

Further, in the present invention, at the time of stopping operation of the fuel cell system, at least based on any of the temperature of the fuel cell stack and the temperature of the evaporator, i.e., in the temperature range where stable production of the water vapor is difficult, the supply of water to the evaporator is stopped. After the stop of the water supply is confirmed, i.e., after it is confirmed that only the raw fuel is supplied, the supply of the raw fuel to the electrode surface of the anode is stopped. Accordingly, it is possible to stably stop operation of the fuel cell system without causing water condensation or the like. Further, degradation of the MEA and the reforming catalyst is inhibited. Improvement in the reliability and durability is achieved, and the product life is prolonged advantageously.

Thus, in the fuel cell system, by simply setting the timings of supplying and stopping the raw fuel, the water vapor and the fuel gas, it is possible to stop operation of the fuel cell system without requiring any purging gas system additionally. Accordingly, the fuel cell system is simplified, and produced at low cost easily.

### Brief Description of Drawings

FIG. 1 is a diagram schematically showing structure of a mechanical circuit of a fuel cell system according to an embodiment of the present invention;
FIG. 2 is a circuit diagram showing the fuel cell system;
FIG. 3 is a cross sectional view showing main components of a fuel cell module of the fuel cell system;
FIG. 4 is a diagram showing structure of a control device of the fuel cell system;
FIG. 5 is a map showing the relationship between the atmosphere around the anode and the stack temperature;
FIG. 6 is a control map at the time of starting operation in an operating method according to the present embodiment;
FIG. 7 is a flow chart at the time of starting operation;
FIG. 8 is a graph showing patterns of molar ratios relative to the temperature;
FIG. 9 is a control map at the time of stopping operation in the operating method according to the present embodiment; and
FIG. 10 is a flow chart at the time of stopping operation.

### Best Mode for Carrying Out the Invention

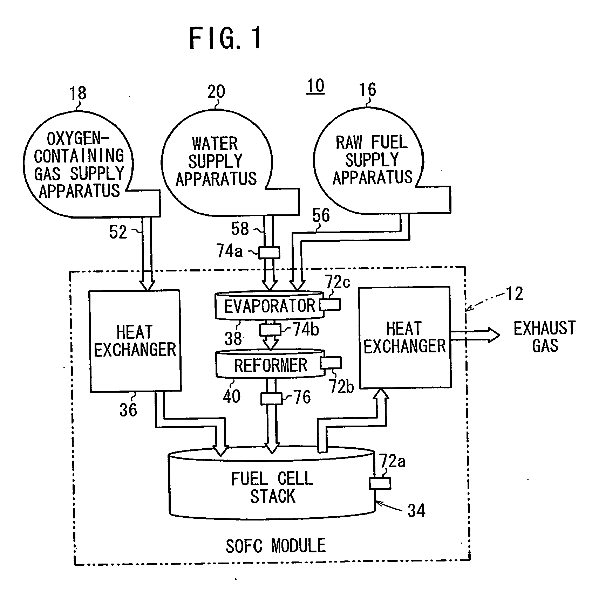

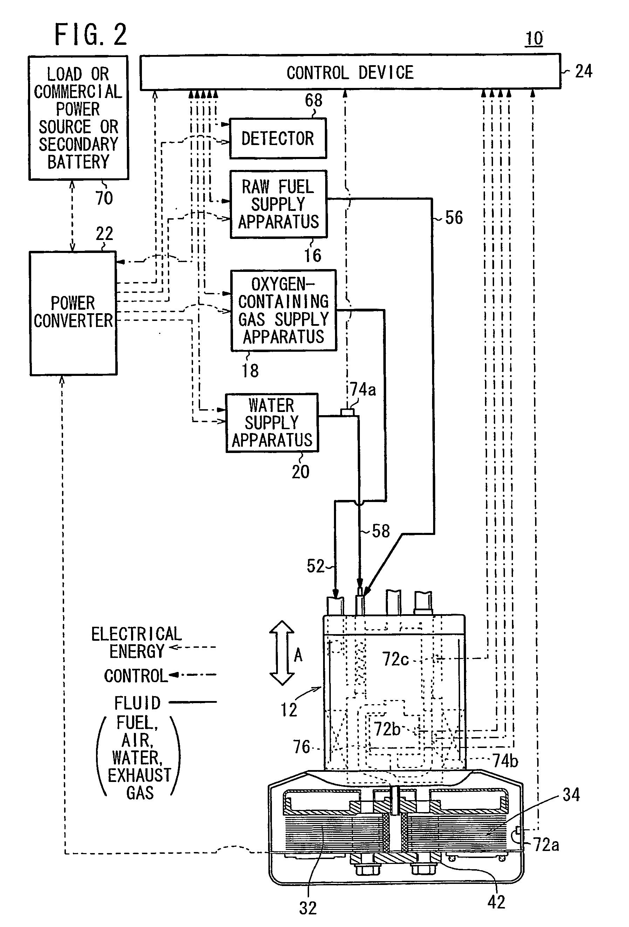

FIG. 1 is a diagram schematically showing structure of a mechanical circuit of a fuel cell system 10 according to an embodiment of the present invention, and FIG. 2 is a circuit diagram showing the fuel cell system 10.

The fuel cell system 10 is used in various applications, including stationary and mobile applications. For example, the fuel cell system 10 is mounted on a vehicle. The fuel cell system 10 includes a fuel cell module (SOFC module) 12 for generating electrical energy in power generation by electrochemical reactions of a fuel gas (hydrogen gas) and an oxygen-containing gas (air), a raw fuel supply apparatus (including a fuel gas pump) 16 for supplying a raw fuel (e.g., city gas) to the fuel cell module 12, an oxygen-containing gas supply apparatus (including an air pump) 18 for supplying an oxygen-containing gas to the fuel cell module 12, a water supply apparatus (including a water pump) 20 for supplying water to the fuel cell module 12, a power converter 22 for converting the direct current electrical energy generated in the fuel cell module 12 to electrical energy according to the requirements specification, and a control device 24 for controlling the amount of electrical energy generated in the fuel cell module 12.

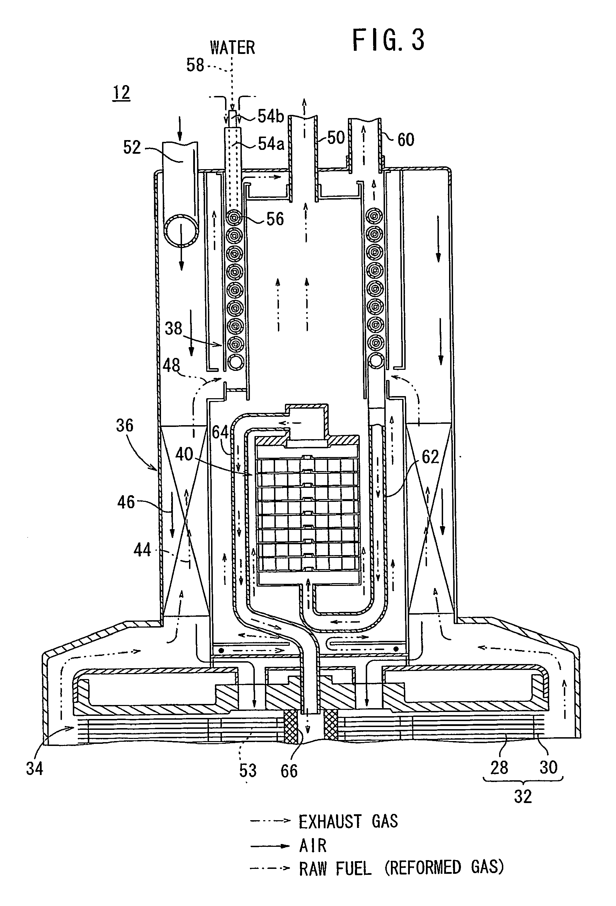

As shown in FIG. 3, the fuel cell module 12 includes a fuel cell stack 34 formed by stacking a plurality of solid oxide fuel cells 32 in a vertical direction. The fuel cells 32 are formed by stacking electrolyte electrode assemblies 28 and separators 30. Though not shown, each of the electrolyte electrode assemblies 28 includes a cathode, an anode, and an electrolyte (solid oxide) interposed between the cathode and the anode. For example, the electrolyte is made of ion-conductive solid oxide such as stabilized zirconia.

At an upper (or lower) end of the fuel cell stack 34 in the stacking direction, a heat exchanger 36 for heating the oxygen-containing gas before the oxygen-containing gas is supplied to the fuel cell stack 34, an evaporator 38 for evaporating water to produce a mixed fuel of the raw fuel and water vapor, and a reformer 40 for reforming the mixed fuel to produce a reformed gas are provided.

At a lower (or upper) end of the fuel cell stack 34 in the stacking direction, a load applying mechanism 42 for applying a tightening load to the fuel cells 32 of the fuel cell stack 34 in the direction indicated by the arrow A is provided (see FIG. 2).

The reformer 40 is a preliminary reformer for reforming higher hydrocarbon (C₂₊) such as ethane (C₂H₆), propane (C₃H₈), and butane (C₄H₁₀) in the city gas (raw fuel) to a fuel gas chiefly containing methane (CH4), hydrogen and CO by steam reforming. The operating temperature of the reformer 40 is several hundred °C.

The operating temperature of the fuel cell 32 is high, at several hundred °C. In the electrolyte electrode assembly 28, methane in the fuel gas is reformed to obtain hydrogen and CO, and the hydrogen and CO are supplied to the anode.

As shown in FIG. 3, the heat exchanger 36 has a first exhaust gas channel 44 as a passage of a consumed reactant gas (hereinafter also referred to as the exhaust gas or the combustion exhaust gas) discharged from the fuel cell stack 34 and an air channel 46 as a passage of the air for allowing the air as a cooling medium (heated fluid) to flow in a counterflow manner with respect to the exhaust gas. The first exhaust gas channel 44 is connected to a second exhaust gas channel 48 for supplying the exhaust gas to the evaporator 38 as a heat source for evaporating water. The first exhaust gas channel 44 is connected to an exhaust gas pipe 50. The upstream side of the air channel 46 is connected to an air supply pipe 52, and the downstream side of the air channel 46 is connected to an oxygen-containing gas supply passage 53 of the fuel cell stack 34.

The evaporator 38 has dual pipe structure including an outer pipe member 54a and an inner pipe member 54b provided coaxially. The dual pipe is provided in the second exhaust gas channel 48. A raw fuel channel 56 is formed between the outer pipe member 54a and the inner pipe member 54b. Further, a water channel 58 is formed in the inner pipe member 54b. The second exhaust gas channel 48 of the evaporator 38 is connected to a main exhaust pipe 60.

The outer pipe member 54a is connected to a mixed fuel supply pipe 62 coupled to an inlet of the reformer 40. One end of a reformed gas supply channel 64 is coupled to an outlet of the reformer 40, and the other end of the reformed gas supply channel 64 is connected to the fuel gas supply passage 66 of the fuel cell stack 34. Instead of the dual pipe structure, the evaporator 38 may include a heater and a mixer (e.g., ejector type mixer).

As shown in FIG. 2, the raw fuel supply apparatus 16 is connected to the raw fuel channel 56. The oxygen-containing gas supply apparatus 18 is connected to the air supply pipe 52, and the water supply apparatus 20 is connected to the water channel 58.

The raw fuel supply apparatus 16, the oxygen-containing gas supply apparatus 18, and the water supply apparatus 20 are controlled by the control device 24. A detector 68 for detecting the fuel gas is electrically connected to the control device 24. For example, a commercial power source 70 (or load, secondary battery, or the like) is connected to the power converter 22.

As shown in FIGS. 1 and 2, the fuel cell system 10 includes a first temperature sensor 72a for detecting the temperature of the fuel cells stack 34, a second temperature sensor 72b for detecting the temperature of the reformer 40, a third temperature sensor 72c for detecting the temperature of the evaporator 38, a first pressure sensor 74a for detecting the pressure of water supplied from the water supply apparatus 20 to the evaporator 38, a second pressure sensor 74b for detecting the pressure of the water vapor discharged from the evaporator 38, and a gas analyzing sensor 76 for detecting components of the fuel gas discharged from the reformer 40 such as the C₂ component.

The first temperature sensor 72a, the second temperature sensor 72b, the third temperature sensor 72c, the first pressure sensor 74a, the second pressure sensor 74b and the gas analyzing sensor 76 are connected to the control device 24. A flow rate sensor for detecting the flow rate of water supplied from the water supply apparatus 20 may be used instead of the first pressure sensor 74a. A flow rate sensor for detecting the flow rate of water vapor discharged from the evaporator 38 may be used instead of the second pressure sensor 74b.

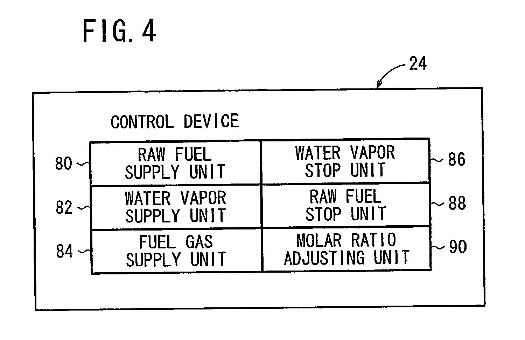

As shown in FIG. 4, the control device 24 has functions of a raw fuel supply unit 80, a water vapor supply unit 82, a fuel gas supply unit 84, a water vapor stop unit 86, a raw fuel stop unit 88, and a molar ratio adjusting unit 90.

The raw fuel supply unit 80 is capable of temporarily supplying the raw fuel to the electrode surface of the anode when operation of the fuel cell system 10 is started. The water vapor supply unit 82 is capable of supplying the water vapor to the electrode surface of the anode after the supply of the raw fuel is stopped, at least based on any of the temperature of the fuel cell stack 34 and the temperature of the evaporator 38. The fuel gas supply unit 84 is capable of supplying the fuel gas to the electrode surface of the anode by supplying the raw fuel together the water to the evaporator 38, at least based on any of the pressure of the water supplied to the evaporator 38, the flow rate of the water supplied to the evaporator 38, the pressure of the water vapor discharged from the evaporator 38, and the flow rate of the water vapor discharged from the evaporator 38.

The water vapor stop unit 86 is capable of stopping the supply of the water to the evaporator 38 when the fuel cell system 10 is stopped, at least based on any of the temperature of the fuel cell stack 34 and the temperature of the evaporator 38. The raw fuel stop unit 88 is capable of stopping the supply of the raw fuel supplied to the electrode surface of the anode at least based on any of the pressure of the water supplied to the evaporator 38, the flow rate of the water supplied to the evaporator 38, the pressure of the water vapor discharged from the evaporator 38, and the flow rate of the water vapor discharged from he evaporator 38. The molar ratio adjusting unit 90 adjusts the molar ratio (S/C) of the water vapor (S) to carbon (C) in the raw fuel. Functions of the molar ratio adjusting unit 90 will be described later in detail.

Operation of the fuel cell system 10 will be described below.

As shown in FIGS. 1 and 2, by operation of the raw fuel supply apparatus 16, for example, a raw fuel such as the city gas (including CH₄ , C₂H₆, C₃H₈ , C₄H₁₀) is supplied to the raw fuel channel 56. Further, by operation of the water supply apparatus 20, water is supplied to the water channel 58, and the oxygen-containing gas such as the air is supplied to the air supply pipe 52 through the oxygen-containing gas supply apparatus 18.

As shown in FIG. 3, in the evaporator 38, the raw fuel flowing through the raw fuel channel 56 is mixed with the water vapor, and a mixed fuel is obtained. The mixed fuel is supplied to the inlet of the reformer 40 through the mixed fuel supply pipe 62. The mixed fuel undergoes steam reforming in the reformer 40. Thus, hydrocarbon of C₂₊ is removed (reformed), and a reformed gas chiefly containing methane is obtained. The reformed gas flows through the reformed gas supply channel 64 connected to the outlet of the reformer 40, and the reformed gas is supplied to the fuel gas supply passage 66 of the fuel cell stack 34. Thus, the methane in the reformed gas is reformed, and the hydrogen gas and CO are obtained. The fuel gas chiefly containing the hydrogen gas and CO is supplied to the anode (not shown).

The air supplied from the air supply pipe 52 to the heat exchanger 36 moves along the air channel 46 in the heat exchanger 36, and heated to a predetermined temperature by heat exchange with the exhaust gas moving along the first exhaust gas channel 44. The air heated by the heat exchanger 36 is supplied to the oxygen-containing gas supply passage 53 of the fuel cell stack 34, and the air is supplied to the cathode (not shown).

Thus, in the electrolyte electrode assembly 28, by electrochemical reactions of the fuel gas and the air, power generation is performed. The hot exhaust gas (several hundred °C) discharged to the outer circumferential region of each of the electrolyte electrode assemblies 28 flows through the first exhaust gas channel 44 of the heat exchanger 36, and heat exchange with the air is carried out. The air is heated to a predetermined temperature, and the temperature of the exhaust gas is decreased.

When the exhaust gas moves along the second exhaust gas channel 48, the water passing through the water channel 58 is evaporated. After the exhaust gas passes through the evaporator 38, the exhaust gas is discharged to the outside through the main exhaust pipe 60.

Next, a method of starting, and a method of stopping the fuel cell system 10 will be described below.

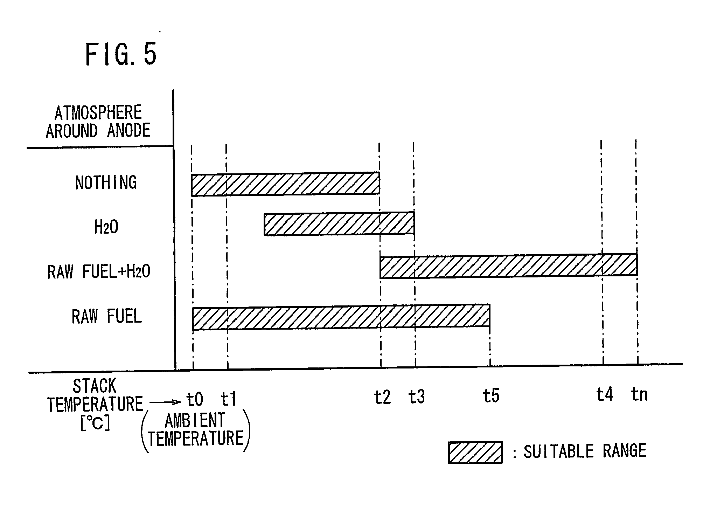

FIG. 5 shows the relationship between the temperature of the fuel cell stack 34 of the fuel cell system 10 (hereinafter also referred to as the stack temperature) and the atmosphere around the anode. That is, in the state where the anode is exposed to the oxygen atmosphere (see "nothing" in FIG. 5), when the stack temperature exceeds t2°C (e.g., 300°C), oxidation occurs easily at the anode. Further, in the state where the anode is exposed to the water vapor atmosphere, when the stack temperature exceeds t3°C (e.g., 350°C), water vapor oxidation occurs easily at the anode.

Further, when the anode is exposed to the raw fuel atmosphere, when the stack temperature exceeds t5°C (e.g., 500°C), coking may occur. In the case where the anode is exposed to the mixed fuel of the raw fuel and water vapor, when the stack temperature becomes t2°C or less, operation of the evaporator 38 becomes unstable, and the S/C (molar ratio) becomes low. Thus, coking occurs, and water condensation may occur in the electrolyte electrode assembly 28. As a result, the electrolyte electrode assembly 28 is degraded undesirably.

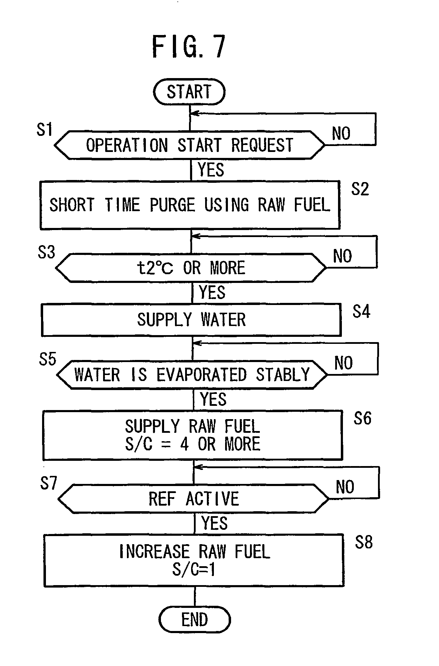

In the embodiment, operation of the fuel cell system 10 is started in accordance with a control map based on the relationship between the atmosphere around the anode and the stack temperature, and a flow chart shown in FIG. 7.

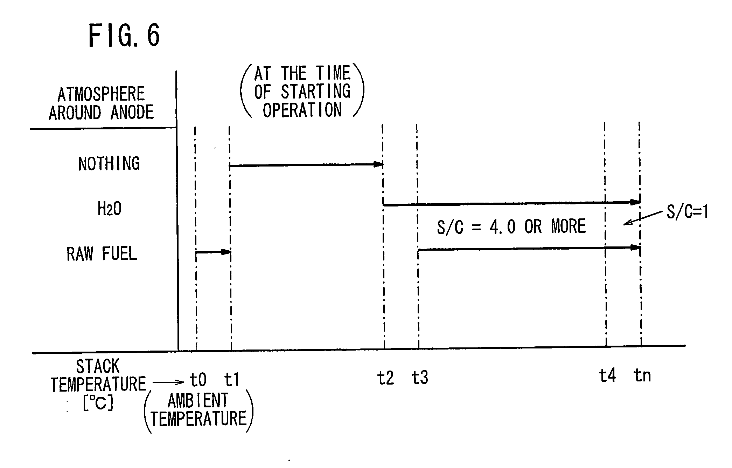

Firstly, when it is determined that there is a request to start operation of the fuel cell system 10 (YES in step S1), the routine proceeds to step S2, and the raw fuel is supplied from the raw fuel supply apparatus 16 to the fuel cell stack 34 for a certain period of time (the raw fuel may be supplied momentarily) (see t0°C in FIG. 6). Thus, the raw fuel purges the air remaining in the fuel line connected to the anode.

After the raw fuel is temporarily supplied to the fuel cell stack 34 for discharging the remaining air, it is determined whether the stack temperature of the fuel cell stack 34 exceeds t2°C or not (step S3). If it is determined that the stack temperature exceeds t2°C (YES in step S3), the routine proceeds to step S4, and the water is supplied to the evaporator 38 by the water supply apparatus 20 (see t2°C in FIG. 6).

Further, it is determined whether the supplied water is evaporated stably (step S5). Specifically, variation in the pressure is monitored by the first pressure sensor 74a disposed in the water channel 58 of the water supply apparatus 20 and/or the second pressure sensor 74b provided downstream of the evaporator 38.

Then, when it is determined that the water is stably evaporated (YES in step S5), the routine proceeds to step S6 to start the supply of the raw fuel by the raw fuel supply apparatus 16 (see t3°C in FIG. 6). Thus, the raw fuel and the water are supplied to the evaporator 38, and the mixed fuel of the raw fuel and the water vapor is produced.

At this time, the molar ratio adjusting unit 90 adjusts the molar ratio (S/C) of the mixed fuel to 4.0 or more (S/C ≥ 4.0). The molar ratio is adjusted to have a higher value until the reformer 40 is placed in a temperature range where the desired reforming function is achieved, to prevent coking or oxidation of the electrolyte electrode assembly 28.

Then, the routine proceeds to step S7 to determine whether the reformer 40 is activated or not. Activation of the reformer 40 is determined based on whether the temperature detected by the second temperature sensor 72b attached to the reformer 40 is suitable for reforming catalyst or not. Alternatively, activation of the reformer 40 may be determined based on the proportion of C₂ or higher carbon components (e.g., C₂, C₃, C₄, ...) in the fuel gas discharged from the reformer 40 by detecting components of the fuel gas discharged from the reformer 40 by the gas analyzing sensor 76.

When it is determined that the reformer 40 has been activated (YES in step S7), the routine proceeds to step S8 for increasing the supply of the raw fuel to adjust the molar ratio to 1 (S/C = 1) (see t4°C in FIG. 6). At this time, operation of starting the fuel cell system 10 is finished.

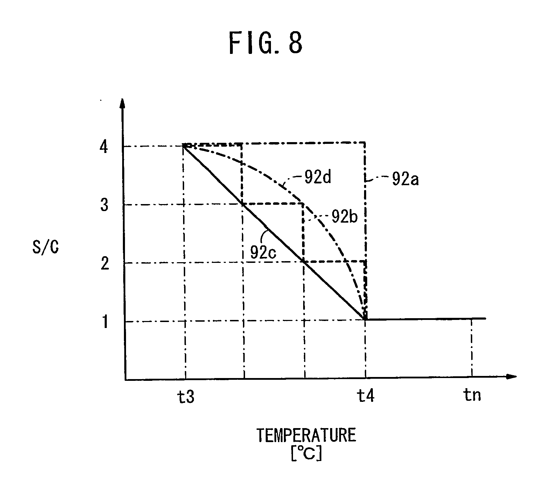

In the molar ratio adjusting unit 90, as shown in FIG. 8, settings of the patterns of the molar ratio relative to the temperature can be made. Specifically, at least based on any of increase in the temperature of the fuel cell stack 34, increase in the temperature of the reformer 40, and decrease in the C₂ component in the fuel gas discharged from the reformer 40, the molar ratio adjusting unit 90 selectively adopts a first decrease pattern 92a for sharply decreasing the molar ratio (S/C ≥ 4) to 1 (S/C = 1) at t4°C, a second decrease pattern 92b for decreasing the molar ratio stepwise in a period where the temperature changes from t3°C to t4°C, a third decrease pattern for linearly decreasing the molar ratio in the period where the temperature changes from t3°C to t4°C, or a fourth decrease pattern 92d for decreasing the molar ratio in a curve in the period where the temperature changes from t3°C to t4°C.

In the method of starting operation according to the embodiment of the present invention, at the ambient temperature (t0°C), firstly, the raw fuel is supplied to the electrode surface of the anode for a short period of time to discharge the air remaining in the fuel line connected to the anode. Therefore, the atmosphere in the fuel line is a reducing atmosphere in the presence of the raw fuel. At the time of raising the temperature of the fuel cell system 10, even if the electrolyte electrode assembly 28 and the reforming catalyst of the reformer 40 are in the active state, it is possible to suitably inhibit oxidation of the electrolyte electrode assembly 28 and the reforming catalyst. Accordingly, improvement in the durability is achieved, and the product life is prolonged advantageously.

When the stack temperature reaches a temperature range (t2°C or higher) where water vapor can be produced stably, the supply of water is started. The supply of the raw fuel is started from a temperature range (t3°C or higher) where water vapor oxidation of the electrolyte electrode assembly 28 occurs easily. Thus, in the temperature range where the water vapor can be produced stably, after it is confirmed that the water vapor is produced stably, supply of the raw fuel is started. Thus, it is possible to start operation of the fuel cell system 10 stably. Further, degradation of the electrolyte electrode assembly 28 and the reforming catalyst is prevented, improvement in the reliability and durability is achieved, and the product life is prolonged advantageously.

Thus, it is possible to start operation of the fuel cell system 10 simply by setting the timings of supplying and stopping the raw fuel and the water vapor without requiring any purge gas supply system additionally. Accordingly, a simple fuel cell system 10 can be provided at low cost easily.

Further, the molar ratio adjusting unit 90 of the control device 24 adjusts the molar ratio of water vapor relative to carbon in the raw fuel at least based on any of the temperature of the fuel cell stack 34, the temperature of the reformer 40, and the detection results of C₂ component in the fuel gas discharged from the reformer 40. Thus, at the time of starting operation of the fuel cell system 10, it is possible to suitably inhibit oxidation or coking of the electrolyte electrode assembly 28 and the reforming catalyst. Improvement in durability is achieved, and the product life can be extended advantageously.

Further, as shown in FIG. 8, the molar ratio adjusting unit 90 can decrease the molar ratio gradually or stepwise. Thus, oxidation or coking of the electrolyte electrode assembly 28 and the reforming catalyst is inhibited. Accordingly, it is possible to start operation of the fuel cell system 10 easily and efficiently. In particular, since the fuel cell 32 is a solid oxide fuel cell, the operating temperature of the fuel cell 32 is high, and at the time of starting operation, the temperature of the fuel cell 32 is raised in a wide range. Therefore, the present invention is suitably applicable to the solid oxide fuel cell 32.

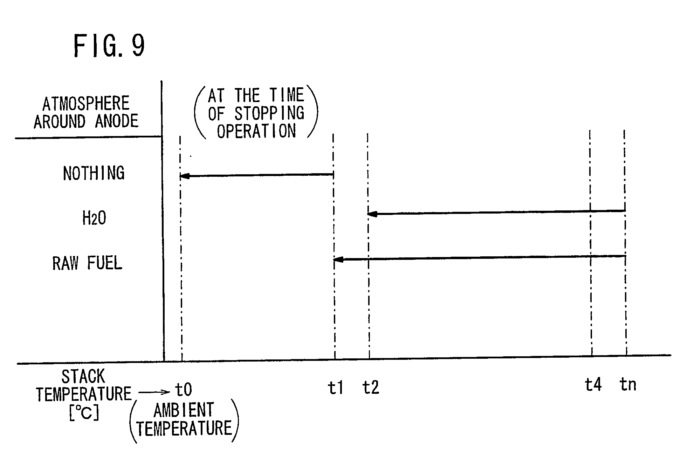

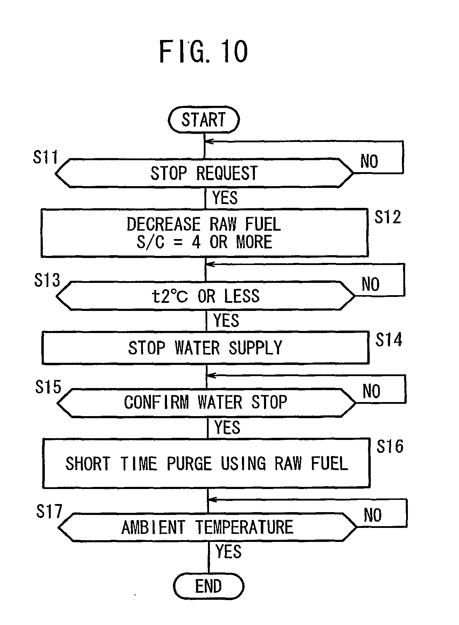

Next, the method of stopping the fuel cell system 10 will be described with reference to a control map in FIG. 9 and a flow chart in FIG. 10.

Firstly, when it is determined that the stop of operation of the fuel cell system 10 is requested (YES in step S11), the routine proceeds to step S12 to adjust the molar ratio to 4 or more (S/C ≥ 4) by decreasing the amount of the supplied raw fuel (see t4°C in FIG. 9).

By selecting the patterns shown in FIG. 8, the molar ratio adjusting unit 90 can increase the molar ratio stepwise or gradually from 1.0 to 4.0 or more (S/C = 1.0 to S/C = 4.0 or more). In step S13, when it is determined that the stack temperature is t2°C or less (YES in step S13), the supply of water from the water supply apparatus 20 is stopped, and only the raw fuel is supplied to the fuel cell stack 34.

In step S15, it is confirmed whether the supply of water is stopped or not. Confirmation of the stop of water supply can be made by monitoring the pressure detected by the first pressure sensor 74a connected to the water supply apparatus 20, or the pressure detected by the second pressure sensor 74b connected to the outlet of the reformer 40.

After the stop of water supply is confirmed (YES in step S15), the routine proceeds to step S16 to perform purging for a short period of time (purging may be performed for a certain period of time, or may be performed momentarily) using only the raw fuel until the temperature reaches t1°C, and the water remaining in the fuel line is discharged to the outside. Thereafter, the water and the raw fuel are not supplied to the anode. By decreasing the temperature of the stack temperature to the ambient temperature, (YES in step S17), the process of stopping operation of the fuel cell system 10 is finished.

In the embodiment of the present invention, at the time of stopping operation of the fuel cell system 10, the supply of water vapor to the electrode surface of the anode is stopped in correspondence with the temperature range (t2°C or less) where stable production of the water vapor is difficult. After the stop of the water vapor supply is confirmed, that is, after it is confirmed that only the raw fuel is supplied to the fuel line, and water is removed from the fuel line, the supply of the raw fuel to the electrode surface of the anode is stopped. Accordingly, it is possible to stably stop operation of the fuel cell system 10 without causing water condensation or the like. Further, degradation of the electrolyte electrode assembly 28 and the reforming catalyst is inhibited. Improvement in the reliability and durability is achieved, and the product life is prolonged advantageously.

Thus, in the fuel cell system 10, by simply setting the timings of supplying and stopping the raw fuel and the water vapor, it is possible to stop operation of the fuel cell system 10 without requiring any purging gas system additionally. Thus, the fuel cell system 10 is simplified, and the fuel cell system 10 is produced at low cost easily.

By using the molar ratio adjusting unit 90, at the time of stopping operation of the fuel cell system 10, the same advantages as in the case of starting operation of the fuel cell system 10 are obtained advantageously.

Although certain preferred embodiments of the present invention have been shown and described in detail, it should be understood that various changes and modifications may be made therein without departing from the scope of the appended claims.

## Claims

1. A fuel cell system (10) comprising:
a fuel cell stack (34) formed by stacking a plurality of fuel cells (32),
the fuel cells (32) each formed by stacking an electrolyte electrode assembly (28) and a separator (30), the electrolyte electrode assembly (28) including an anode, a cathode, and an electrolyte interposed between the anode and the cathode;
an evaporator (38) for producing a mixed fuel of a raw fuel chiefly containing hydrocarbon and water vapor obtained by evaporating water;
a reformer (40) for producing a fuel gas by reforming the mixed fuel; and
a control device (24),
the control device (24) comprising:
a raw fuel supply unit (80) for temporarily supplying the raw fuel to an electrode surface of the anode at the time of starting operation of the fuel cell system (10);
a water vapor supply unit (82) for supplying the water vapor to the electrode surface of the anode at least based on any of a temperature of the fuel cell stack (34) and a temperature of the evaporator (38) after stopping the supply of the raw fuel; and
a fuel gas supply unit (84) for supplying the fuel gas to the electrode surface of the anode by supplying the raw fuel and the water to the evaporator (38) at least based on any of detection results of a pressure of the water supplied to the evaporator (38), a flow rate of the water supplied to the evaporator (38), a pressure of the water vapor discharged from the evaporator (38), and a flow rate of the water vapor discharged from the evaporator (38).

2. A fuel cell system (10) according to claim 1,
the control device (24) comprising:
a water vapor stop unit (86) for supplying the raw fuel to the electrode surface of the anode by stopping the supply of the water to the evaporator (38) at least based on any of a temperature of the fuel cell stack (34) and a temperature of the evaporator (38) at the time of stopping operation of the fuel cell system (10); and
a raw fuel stop unit (88) for stopping the supply of the raw fuel to the electrode surface of the anode at least based on any of detection results of a pressure of the water supplied to the evaporator (38), a flow rate of the water supplied to the evaporator (38), a pressure of the water vapor discharged from the evaporator (38), and a flow rate of the water vapor discharged from the evaporator (38).

3. A fuel cell system according to claim 1 or 2, wherein the control device (24) has a molar ratio adjusting unit (90) for adjusting a molar ratio of the water vapor to carbon in the raw fuel at least based on any of detection results of the temperature of the fuel cell stack (34), a temperature of the reformer (40), and components of the fuel gas discharged from the reformer (40).

4. A fuel cell system according to claim 3 , wherein the molar ratio adjusting unit (90) decreases the molar ratio gradually or stepwise at least based on any of increase in the temperature of the fuel cell stack (34), increase in the temperature of the reformer (40), and decrease in C₂ component in the fuel gas discharged from the reformer (40).

5. A fuel cell system according to claim 3 , wherein the molar ratio adjusting unit (90) increases the molar ratio gradually or stepwise at least based on any of decrease in the temperature of the fuel cell stack (34), decrease in the temperature of the reformer (40), and increase in C₂ component in the fuel gas discharged from the reformer (40).

6. A fuel cell system according to claim 1 or 2, wherein the fuel cell (32) is a solid oxide fuel cell.

7. A method of operating a fuel cell system (10), the fuel cell system (10) comprising:
a fuel cell stack (34) formed by stacking a plurality of fuel cells (32),
the fuel cells (32) each formed by stacking an electrolyte electrode assembly (28) and a separator (30), the electrolyte electrode assembly (28) including an anode, a cathode, and an electrolyte interposed between the anode and the cathode;
an evaporator (38) for producing a mixed fuel of a raw fuel chiefly containing hydrocarbon and water vapor obtained by evaporating water,
a reformer (40) for producing a fuel gas by reforming the mixed fuel; and
a control device (24),
the method comprising the steps of:
temporarily supplying the raw fuel to an electrode surface of the anode at the time of starting operation of the fuel cell system (10);
supplying the water vapor to the electrode surface of the anode at least based on any of a temperature of the fuel cell stack (34) and a temperature of the evaporator (38) after stopping the supply of the raw fuel; and
supplying the fuel gas to the electrode surface of the anode by supplying the raw fuel and the water to the evaporator (38) at least based on any of detection results of a pressure of the water supplied to the evaporator (38), a flow rate of the water supplied to the evaporator (38), a pressure of the water vapor discharged from the evaporator (38), and a flow rate of the water vapor discharged from the evaporator (38).

8. An operation method according to claim 7, comprising the steps of:
supplying the raw fuel to an electrode surface of the anode by stopping the supply of the water to the evaporator (38) at least based on any of a temperature of the fuel cell stack (34) and a temperature of the evaporator (38) at the time of stopping operation of the fuel cell system (10); and
stopping the supply of the raw fuel to the electrode surface of the anode at least based on any of detection results of a pressure of the water supplied to the evaporator (38), a flow rate of the water supplied to the evaporator (38), a pressure of the water vapor discharged from the evaporator (38), and a flow rate of the water vapor discharged from the evaporator (38).

9. An operating method according to claim 7 or 8 , further comprising the step of adjusting the molar ratio of the water vapor to carbon in the raw fuel at least based on any of detection results of the temperature of the fuel cell stack (34), a temperature of the reformer (40), and components of the fuel gas discharged from the reformer (40).

10. An operating method according to claim 9, wherein the molar ratio is decreased gradually or stepwise at least based on any of increase in the temperature of the fuel cell stack (34), increase in the temperature of the reformer (40), and decrease in C₂ component in the fuel gas discharged from the reformer (40).

11. An operating method according to claim 9, wherein the molar ratio is increased gradually or stepwise at least based on any of decrease in the temperature of the fuel cell stack (34), decrease in the temperature of the reformer (40), and increase in C₂ component in the fuel gas discharged from the reformer (40).

12. An operating method according to claim 7 or 8, wherein the fuel cell (32) is a solid oxide fuel cell.

## Patentansprüche

1. Brennstoffzellensystem (10), umfassend:
einen Brennstoffzellenstapel (34), der durch Stapeln einer Mehrzahl von Brennstoffzellen (32) gebildet ist, wobei die Brennstoffzellen (32) jeweils durch Stapeln von einer Elektrolytelektrodenanordnung (28) und
einem Separator (30) gebildet sind, wobei die Elektrolytelektrodenanordnung (28) eine Anode, eine Kathode und
einen zwischen der Anode und der Kathode eingefügten Elektrolyten enthält;
einen Verdampfer (38) zum Erzeugen eines Mischbrennstoffs aus einem hauptsächlich Kohlenwasserstoff enthaltenden Rohbrennstoff und von durch Wasserverdampfung erhaltenem Wasserdampf;
einen Reformer (40) zum Erzeugen eines Brenngases durch Reformieren des Mischbrennstoffes; und
eine Steuervorrichtung (24);
wobei die Steuervorrichtung (24) umfasst:
eine Rohbrennstoffzuführeinheit (80) zum zeitweiligen Zuführen des Rohbrennstoffs zu einer Elektrodenoberfläche der Anode während des Startbetriebs des Brennstoffzellensystems (10);
eine Wasserdampfzuführeinheit (82) zum Zuführen des Wasserdampfes zu der Elektrodenoberfläche der Anode zumindest basierend auf einer Temperatur des Brennstoffzellenstapels (34) und/oder einer Temperatur des Verdampfers (38) nach dem Stopp der Zufuhr des Rohbrennstoffs; und
eine Brenngaszuführeinheit (84) zum Zuführen des Brenngases zu der Elektrodenoberfläche der Anode durch Zuführen des Rohbrennstoffs und des Wassers zu dem Verdampfer (38) zumindest basierend auf einem von Erfassungsergebnissen eines Drucks des dem Verdampfer (38) zugeführten Wassers, einer Strömungsrate des dem Verdampfer (38) zugeführten Wassers, eines Drucks des vom Verdampfer (38) abgegebenen Wasserdampfes und einer Strömungsrate des vom Verdampfer (38) abgegebenen Wasserdampfs.

2. Brennstoffzellensystem nach Anspruch 1, worin die Steuervorrichtung (24) umfasst:
eine Wasserdampf-Stoppeinheit (86) zum Zuführen des Rohbrennstoffs zur Elektrodenoberfläche der Anode durch Stoppen der Zufuhr des Wassers zum Verdampfer (38) zumindest basierend auf einer Temperatur des Brennstoffzellenstapels (34) und/oder einer Temperatur des Verdampfers (38) während des Stoppbetriebs des Brennstoffzellensystems (10); und
eine Rohbrennstoff-Stoppeinheit (88) zum Stoppen der Zufuhr des Rohbrennstoffs zu der Elektrodenoberfläche der Anode zumindest basierend auf einem von Erfassungsergebnissen eines Drucks des dem Verdampfer (38) zugeführten Wassers, einer Strömungsrate des dem Verdampfer (38) zugeführten Wassers, eines Drucks des vom Verdampfer (38) abgegebenen Wasserdampfs und einer Strömungsrate des vom Verdampfer (38) abgegebenen Wasserdampfs.

3. Das Brennstoffzellensystem nach Anspruch 1 oder 2, worin die Steuervorrichtung (24) eine Molarverhältnis-Einstelleinheit (90) aufweist, um ein molares Verhältnis des Wasserdampfs zum Kohlenstoff in dem Rohbrennstoff einzustellen, basierend zumindest auf einem von Erfassungsergebnissen der Temperatur des Brennstoffzellenstapels (34), einer Temperatur des Reformers (40), und Komponenten des vom Reformer (40) abgegebenen Brenngases.

4. Das Brennstoffzellensystem nach Anspruch 3, worin die Molarverhältnis-Einstelleinheit (90) das molare Verhältnis allmählich oder stufenweise verringert, zumindest basierend auf einer Zunahme der Temperatur des Brennstoffzellenstapels (34) und/oder einer Zunahme der Temperatur des Reformers (40) und/oder einer Abnahme einer C₂-Komponente im von dem Reformer (40) abgegebenen Brenngas.

5. Das Brennstoffzellensystem nach Anspruch 3, worin die Molarverhältnis-Einstelleinheit (90) das molare Verhältnis allmählich oder stufenweise erhöht, zumindest basierend auf einer Abnahme der Temperatur des Brennstoffzellenstapels (34) und/oder einer Abnahme der Temperatur des Reformers (40) und/oder einer Zunahme einer C₂-Komponente im von dem Reformer (40) abgegebenen Brenngas.

6. Das Brennstoffzellensystem nach Anspruch 1 oder 2, worin die Brennstoffzelle (32) eine Festoxid-Brennstoffzelle ist.

7. Verfahren zum Betreiben eines Brennstoffzellensystems (10), worin das Brennstoffzellensystem (10) umfasst:
einen Brennstoffzellenstapel (34), der durch Stapeln einer Mehrzahl von Brennstoffzellen (32) gebildet ist, wobei die Brennstoffzellen (32) jeweils durch Stapeln von einer Elektrolytelektrodenanordnung (28) und
einem Separator (30) gebildet sind, wobei die Elektrolytelektrodenanordnung (28) eine Anode, eine Kathode und
einen zwischen der Anode und der Kathode eingefügten Elektrolyten enthält;
einen Verdampfer (38) zum Erzeugen eines Mischbrennstoffs aus einem hauptsächlich Kohlenwasserstoff enthaltenden Rohbrennstoff und von durch Wasserverdampfung erhaltenem Wasserdampf;
einen Reformer (40) zum Erzeugen eines Brenngases durch Reformieren des Mischbrennstoffes; und
eine Steuervorrichtung (24);
wobei das Verfahren die Schritte umfasst:
zeitweiliges Zuführen des Rohbrennstoffs zu einer Elektrodenoberfläche der Anode während des Startbetriebs des Brennstoffzellensystems (10);
Zuführen des Wasserdampfes zu der Elektrodenoberfläche der Anode zumindest basierend auf einer Temperatur des Brennstoffzellenstapels (34) und/oder einer Temperatur des Verdampfers (38) nach dem Stopp der Zufuhr des Rohbrennstoffs; und
Zuführen des Brenngases zu der Elektrodenoberfläche der Anode durch Zuführen des Rohbrennstoffs und des Wassers zu dem Verdampfer (38) zumindest basierend auf einem von Erfassungsergebnissen eines Drucks des dem Verdampfer (38) zugeführten Wassers, einer Strömungsrate des dem Verdampfer (38) zugeführten Wassers, eines Drucks des vom Verdampfer (38) abgegebenen Wasserdampfes und einer Strömungsrate des vom Verdampfer (38) abgegebenen Wasserdampfs.

8. Betriebsverfahren nach Anspruch 7, welches die Schritte umfasst:
Zuführen des Rohbrennstoffs zur Elektrodenoberfläche der Anode durch Stoppen der Zufuhr des Wassers zum Verdampfer (38) zumindest basierend auf einer Temperatur des Brennstoffizellenstapels (34) und/oder einer Temperatur des Verdampfers (38) während des Stoppbetriebs des Brennstoffzellensystems (10); und
Stoppen der Zufuhr des Rohbrennstoffs zu der Elektrodenoberfläche der Anode zumindest basierend auf einem von Erfassungsergebnissen eines Drucks des dem Verdampfer (38) zugeführten Wassers, einer Strömungsrate des dem Verdampfer (38) zugeführten Wassers, eines Drucks des vom Verdampfer (38) abgegebenen Wasserdampfs und einer Strömungsrate des vom Verdampfer (38) abgegebenen Wasserdampfs.

9. Betriebsverfahren nach Anspruch 7 oder 8, welches ferner den Schritt umfasst:
Einstellen eines molaren Verhältnisses des Wasserdampfs zum Kohlenstoff in dem Rohbrennstoff, basierend zumindest auf einem von Erfassungsergebnissen der Temperatur des Brennstoffzellenstapels (34), einer Temperatur des Reformers (40), und Komponenten des vom Reformer (40) abgegebenen Brenngases.

10. Betriebsverfahren nach Anspruch 9, worin das molare Verhältnis allmählich oder stufenweise verringert wird, zumindest basierend auf einer Zunahme der Temperatur des Brennstoffzellenstapels (34) und/oder einer Zunahme der Temperatur des Reformers (40) und/oder einer Abnahme einer C₂-Komponente im von dem Reformer (40) abgegebenen Brenngas.

11. Betriebsverfahren nach Anspruch 9, worin das molare Verhältnis allmählich oder stufenweise erhöht wird, zumindest basierend auf einer Abnahme der Temperatur des Brennstoffzellenstapels (34) und/oder einer Abnahme der Temperatur des Reformers (40) und/oder einer Zunahme einer C₂-Komponente im von dem Reformer (40) abgegebenen Brenngas.

12. Betriebsverfahren nach Anspruch 7 oder 8, worin die Brennstoffzelle (32) eine Festoxid-Brennstoffzelle ist.

## Revendications

1. Système de piles à combustible (10) comprenant :
un empilage de piles à combustible (34) formé en empilant une pluralité de piles à combustible (32), les piles à combustible (32) étant formées chacune en empilant un ensemble électrodes-électrolyte (28) et un séparateur (30), l'ensemble électrodes-électrolyte (28) comprenant une anode, une cathode et un électrolyte interposé entre l'anode et la cathode ;
un évaporateur (38) pour produire un combustible mélangé d'un combustible brut contenant principalement des hydrocarbures et de vapeur d'eau obtenue en évaporant de l'eau ;
un reformeur (40) pour produire un combustible gazeux en reformant le combustible mélangé ; et
un dispositif de commande (24),
le dispositif de commande (24) comprenant :
une unité d'alimentation en combustible brut (80) pour fournir temporairement le combustible brut à une surface d'électrode de l'anode à l'instant de début du fonctionnement du système de piles à combustible (10) ;
une unité d'alimentation en vapeur d'eau (82) pour fournir la vapeur d'eau à la surface d'électrode de l'anode au moins sur la base de l'une quelconque d'une température de l'empilage de piles à combustible (34) et d'une température de l'évaporateur (38) après l'arrêt de la fourniture du combustible brut ; et
une unité d'alimentation en combustible gazeux (84) pour fournir le combustible gazeux à la surface d'électrode de l'anode en fournissant le combustible brut et l'eau à l'évaporateur (38) au moins sur la base de l'un quelconque de résultats de détection d'une pression de l'eau fournie à l'évaporateur (38), d'un débit de l'eau fournie à l'évaporateur (38), d'une pression de la vapeur d'eau déchargée de l'évaporateur (38) et d'un débit de la vapeur d'eau déchargée de l'évaporateur (38).

2. Système de piles à combustible (10) selon la revendication 1,
le dispositif de commande (24) comprenant :
une unité d'arrêt de vapeur d'eau (86) pour fournir le combustible brut à la surface d'électrode de l'anode en arrêtant la fourniture de l'eau à l'évaporateur (38) au moins sur la base de l'une quelconque d'une température de l'empilage de piles à combustible (34) et d'une température de l'évaporateur (38) à l'instant d'arrêt du fonctionnement du système de piles à combustible (10) ; et
une unité d'arrêt de combustible brut (88) pour arrêter la fourniture du combustible brut à la surface d'électrode de l'anode au moins sur la base de l'un quelconque de résultats de détection d'une pression de l'eau fournie à l'évaporateur (38), d'un débit de l'eau fournie à l'évaporateur (38), d'une pression de la vapeur d'eau déchargée de l'évaporateur (38) et d'un débit de la vapeur d'eau déchargée de l'évaporateur (38) .

3. Système de piles à combustible selon la revendication 1 ou 2, dans lequel le dispositif de commande (24) comporte une unité d'ajustement de rapport molaire (90) pour ajuster un rapport molaire entre la vapeur d'eau et le carbone dans le combustible brut au moins sur la base de l'un quelconque de résultats de détection de la température de l'empilage de piles à combustible (34), d'une température du reformeur (40) et des composants du combustible gazeux déchargé du reformeur (40).

4. Système de piles à combustible selon la revendication 3, dans lequel l'unité d'ajustement de rapport molaire (90) diminue le rapport molaire graduellement ou par pas au moins sur la base de l'une quelconque d'une augmentation de la température de l'empilage de piles à combustible (34), d'une augmentation de la température du reformeur (40) et d'une diminution du composant C₂ dans le combustible gazeux déchargé du reformeur (40).

5. Système de piles à combustible selon la revendication 3, dans lequel l'unité d'ajustement de rapport molaire (90) augmente le rapport molaire graduellement ou par pas au moins sur la base de l'une quelconque d'une diminution de la température de l'empilage de piles à combustible (34), d'une diminution de la température du reformeur (40) et d'une augmentation du composant C₂ dans le combustible gazeux déchargé du reformeur (40) .

6. Système de piles à combustible selon la revendication 1 ou 2, dans lequel la pile à combustible (32) est une pile à combustible à oxyde solide.

7. Procédé de mise en oeuvre d'un système de piles à combustible (10), le système de piles à combustible (10) comprenant :
un empilage de piles à combustible (34) formé en empilant une pluralité de piles à combustible (32), les piles à combustible (32) étant formées chacune en empilant un ensemble électrodes-électrolyte (28) et un séparateur (30), l'ensemble électrodes-électrolyte (28) comprenant une anode, une cathode et un électrolyte interposé entre l'anode et la cathode ;
un évaporateur (38) pour produire un combustible mélangé d'un combustible brut contenant principalement des hydrocarbures et de vapeur d'eau obtenue en évaporant de l'eau ;
un reformeur (40) pour produire un combustible gazeux en reformant le combustible mélangé ; et
un dispositif de commande (24),
le procédé comprenant les étapes consistant à :
fournir temporairement le combustible brut à une surface d'électrode de l'anode à l'instant de début du fonctionnement du système de piles à combustible (10) ;
fournir la vapeur d'eau à la surface d'électrode de l'anode au moins sur la base de l'une quelconque d'une température de l'empilage de piles à combustible (34) et d'une température de l'évaporateur (38) après l'arrêt de la fourniture du combustible brut ; et
fournir le combustible gazeux à la surface d'électrode de l'anode en fournissant le combustible brut et l'eau à l'évaporateur (38) au moins sur la base de l'un quelconque de résultats de détection d'une pression de l'eau fournie à l'évaporateur (38), d'un débit de l'eau fournie à l'évaporateur (38), d'une pression de la vapeur d'eau déchargée de l'évaporateur (38) et d'un débit de la vapeur d'eau déchargée de l'évaporateur (38) .

8. Procédé de mise en oeuvre selon la revendication 7, comprenant les étapes consistant à :
fournir le combustible brut à une surface d'électrode de l'anode en arrêtant la fourniture de l'eau à l'évaporateur (38) au moins sur la base de l'une quelconque d'une température de l'empilage de piles à combustible (34) et d'une température de l'évaporateur (38) à l'instant d'arrêt du fonctionnement du système de piles à combustible (10) ; et
arrêter la fourniture du combustible brut à la surface d'électrode de l'anode au moins sur la base de l'un quelconque de résultats de détection d'une pression de l'eau fournie à l'évaporateur (38), d'un débit de l'eau fournie à l'évaporateur (38), d'une pression de la vapeur d'eau déchargée de l'évaporateur (38) et d'un débit de la vapeur d'eau déchargée de l'évaporateur (38).

9. Procédé de mise en oeuvre selon la revendication 7 ou 8, comprenant en outre l'étape consistant à ajuster le rapport molaire entre la vapeur d'eau et le carbone dans le combustible brut au moins sur la base de l'un quelconque de résultats de détection de la température de l'empilage de piles à combustible (34), d'une température du reformeur (40) et des composants du combustible gazeux déchargé du reformeur (40).

10. Procédé de mise en oeuvre selon la revendication 9, dans lequel le rapport molaire est diminué graduellement ou par pas au moins sur la base de l'une quelconque d'une augmentation de la température de l'empilage de piles à combustible (34), d'une augmentation de la température du reformeur (40) et d'une diminution du composant C₂ dans le combustible gazeux déchargé du reformeur (40).

11. Procédé de mise en oeuvre selon la revendication 9, dans lequel le rapport molaire est augmenté graduellement ou par pas au moins sur la base de l'une quelconque d'une diminution de la température de l'empilage de piles à combustible (34), d'une diminution de la température du reformeur (40) et d'une augmentation du composant C₂ dans le combustible gazeux déchargé du reformeur (40).

12. Procédé de mise en oeuvre selon la revendication 7 ou 8, dans lequel la pile à combustible (32) est une pile à combustible à oxyde solide.
